# EUROPEAN PATENT APPLICATION

(11) **EP 4 506 046 A1**
(43) Date of publication of application: **12.02.2025**
(21) Application number: 24171033.4
(22) Date of filing: 18.04.2024
(51) Int. Cl.: A63F 13/35, A63F 13/67, A63F 13/71, A63F 13/75, A63F 13/837

(54) **DISTRIBUTED AIMBOT DETECTION SYSTEM AND METHOD USING TRUSTED EXECUTION ENVIRONMENT AND DEEP LEARNING**

(30) Priority: 10.08.2023 KR 20230104837
(71) Applicant: Korea Advanced Institute of Science and Technology, Daejeon 34141 (KR)
(72) Inventor: CHA, Sang Kil, 34141 Daejeon (KR); CHOI, Minyeop, 34141 Daejeon (KR); KO, Gihyuk, 34141 Daejeon (KR)
(74) Representative: Boco IP Oy Ab

(57) **Abstract**

Disclosed is a distributed aimbot detection system and method using a trusted execution environment (TEE) and deep learning. An aimbot detection system may include a data management module configured to receive game play information including action data of a game player from a game server; and an aimbot detection module configured to derive aimbot detection results from the action data included in the received game play information using an aimbot detection model, and the data management module and the aimbot detection module may be configured in a trusted execution environment (TEE) of a client.

## Description

### BACKGROUND

### 1. Field of the Invention

Example embodiments relate to aimbot detection technology.

### 2. Description of the Related Art

Today's online game industry continues to grow in scale due to the development of high-performance computers, graphics processing units, and high-speed Internet. In esports games, each team in a game has a structure in which victory or defeat is determined based on the skill in a fair situation. However, a game hack that is a hacking tool of undermining fairness by tampering with a game client and by gaining an advantage over other game players in a competitive game through a manipulation that regular game players cannot do is being used. This is one of important threats that directly harms the entire online game industry including esports. In particular, the damage of the game hack is most evident in a first-person shooter (FPS) game and a representative example is an aimbot that assists aiming at an opponent. To prevent such an aimbot, FPS game manufacturers or security experts are suggesting and applying various methods. However, there are players who use aimbots, harming the fairness of a game. Aimbot detection in use to date may be broadly divided into two types. There are two methods, a method of detecting an abnormal behavior by recording behaviors, that is, actions of all payers on a central server that is directly managed by a game developer and a method of detecting presence of an unauthorized program that tampers with a game client or affects a game on a computer of a player.

Meanwhile, in the case of technology for detecting an abnormal behavior by recording a player' action on a central game server, there is a need to build a high-performance server capable of simultaneously monitoring numerous games being played in real time and, as the number of players increases, a server scale and management cost thereof need to increase and accordingly, there are problems, such as high cost and difficulty in scalability. There is a detection technique that minimizes computation of a central server by exploiting only game statistical information of a player account, such as a victory-and-defeat ratio, a kill-and-death ratio, and the like. However, this statistical value-based detection method has a disadvantage of being easily by-passable.

Also, a method of detecting tampering of a game client or an unauthorized program is not a method capable of fundamentally preventing an aimbot since there is a method that allows an attacker (player using an aimbot) to bypass detection with higher privilege on a computer on which the aimbot is running.

### SUMMARY

Detection needs to have no scalability issue for the continuously increasing number of game users, accuracy needs to be high in detection, and it needs to be difficult for an aimbot user to bypass detection. The subject to be solved by the present invention is to accurately and efficiently detect a player using an aimbot through a distributed aimbot detection system using a trusted execution environment (TEE) and a deep learning model, and to minimize the probability of bypass.

According to an aspect, there is provided an aimbot detection system including a data management module configured to receive game play information including action data of a game player from a game server; and an aimbot detection module configured to derive aimbot detection results from the action data included in the received game play information using an aimbot detection model. The data management module and the aimbot detection module may be configured in a trusted execution environment (TEE) of a client.

The data management module may be configured to transform the action data of the game player included in the received game play information, to input to the aimbot detection model.

The data management module may be configured to transfer the game play information that includes the action data of the game player, received from the game server, to each of a game engine and the aimbot detection module, and the aimbot detection module may be configured to receive weapon firing information and information related to a time in the action data of the game player.

The aimbot detection model may be configured to predict an action of the game player after a predetermined period of time and is trained to detect an aimbot by comparing a difference between the predicted action of the game player and an actual action of the game player.

The aimbot detection module may be configured to determine that the game player uses the aimbot when a difference between an action of the game player and an actual action of the game player is greater than a reference value as detection results derived through the aimbot detection model.

The aimbot detection module may be configured to send the derived detection results to the game server.

The aimbot detection system may be configured to perform encrypted communication that disallows bugging or tampering when receiving the game play information from the game server or sending the derived aimbot detection results to the game server.

The game server may be configured to take an action according to a policy set for the game player based on the derived aimbot detection results.

According to an aspect, there is provided an aimbot detection method performed by an aimbot detection system, the aimbot detection method including receiving game play information including action data of a game player from a game server; deriving aimbot detection results from the action data included in the received game play information using an aimbot detection model; and sending the derived aimbot detection results to the game server. A data management module and an aimbot detection module may be configured in a trusted execution environ (TEE) of a client.

According to an aspect, there is provided a non-transitory computer-readable recording medium storing instructions that, when executed by a processor, cause the processor to perform an aimbot detection method performed by an aimbot detection system, the aimbot detection method including receiving game play information including action data of a game player from a game server; deriving aimbot detection results from the action data included in the received game play information using an aimbot detection model; and sending the derived aimbot detection results to the game server, and a data management module and an aimbot detection module are configured in a trusted execution environ (TEE) of a client.

According to some example embodiments, it is possible to efficiently and accurately detect players using an aimbot in an online first-person shooter (FPS) game without load on a central server.

According to some example embodiments, it is very difficult for an aimbot player to bypass detection or to make an attack based on a trusted execution environment.

According to some example embodiments, sanctioning players using an aimbot has the effect of allowing honest players to enjoy the game equally under the same condition.

### BRIEF DESCRIPTION OF THE DRAWINGS

These and/or other aspects, features, and advantages of the invention will become apparent and more readily appreciated from the following description of embodiments, taken in conjunction with the accompanying drawings of which:
FIG. 1 illustrates an aimbot detection operation according to an example embodiment;
FIG. 2 is a flowchart illustrating an aimbot detection method according to an example embodiment;
FIG. 3 illustrates an angle between a line of sight and a potential target according to an example embodiment; and
FIG. 4 illustrates a method of computing an anomaly score according to an example embodiment.

### DETAILED DESCRIPTION

Hereinafter, example embodiments will be described with reference to the accompanying drawings.

Example embodiments relate to an operation of automatically detecting an aimbot using only clients while minimizing a load on a central server (game server) with respect to a game player using the aimbot in a first-person shooter (FPS) game.

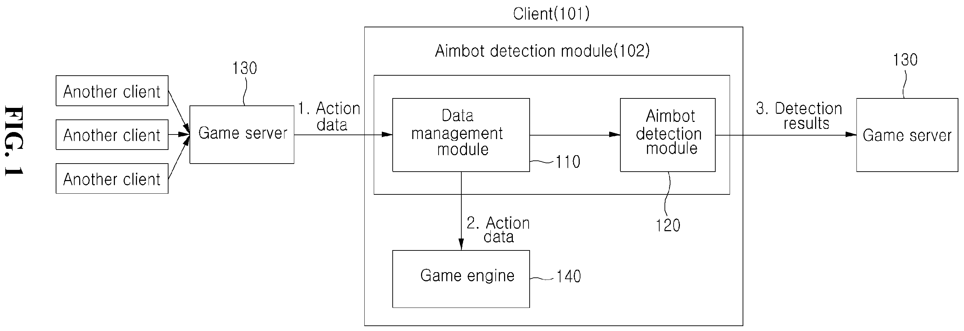

FIG. 1 illustrates an aimbot detection operation according to an example embodiment.

An aimbot detection system according to an example embodiment may achieve distributed aimbot detection by solving an aimbot detection task in such a manner that each client 101, that is, all game players monitor each other. Each client 101 may monitor sophisticated movements of nearby game players.

The aimbot detection system may include a data management module 110 and an aimbot detection module 120. The data management module 110 and the aimbot detection module 120 may be configured in a trusted execution environment 102 of each client 101. The data management module 110 may receive game play information of an arbitrary game player. Here, the game play information represents information (including action data) generated in association with a game event during a game play. The data management module 110 may receive the action data and transfer the same to a game engine 140, and may transform the action data to transfer the same as input to an aimbot detection model. The aimbot detection module 120 may detect an aimbot use status using the action data transformed from the data management module 110. The data management module 110 and the aimbot detection module 120 are positioned inside the trusted execution environment 102 and may be easily tampered with by attackers.

According to an example embodiment, since the aimbot detection system runs on a client side, overhead does not occur on a game server 130. Also, high detection accuracy may be achieved by using the aimbot detection model that analyzes a game player's aiming movement. Also, since the aimbot detection system manages game play information within the trusted execution environment 102, it is difficult for a strong attacker to manipulate game data. Also, by hiring game players whose level of expertise ranges from average to professional, a realistic game player dataset with or without using an aimbot may be collected.

The aimbot detection system may operate as follows.

As a preprocessing stage, each client 101 may perform two tasks before a game starts. Initially, each client 101 may establish a TLS (Transport Layer Security) session with the game server 130 (inside the TEE 102) to securely deliver a detection report. Then, each client 101 may temporarily store a game aimbot detection model in an enclave in the trusteed execution environment 102. For example, the aimbot detection model may be downloaded from the game server 130. This way, an attacker may not access the aimbot detection model.

When the game starts, each game engine 140 may receive a user input and may share action information with another client through a network. In particular, the data management module 110 (that is located in the TEE 102 of each client 101) may fetch a game event stream of all nearby clients from the network and may convert the same to a vectorized data stream. Also, the data management module 110 may relay all the received game play information to (1) the game engine 140 to render the game and (2) the aimbot detection module 120 to verify who is cheating. Due to the nature of an FPS game, major actions of other game players are visible by each game player, that is, each client 101, as long as they are within the sight.

The aimbot detection module (that is located in the TEE 102 of each client 101) 120 may read the vectorized data and analyze shooting behaviors of other clients to determine whether the other clients use an aimbot. The aimbot detection results derived from the aimbot detection module 120 may be immediately sent to the game server 130 using a secure channel. The aimbot detection module 120 may recognize an abnormal shooting behavior that deviates from a normal human behavior through the aimbot detection model.

The game server 130 may collect a detection report stream from all clients to detect a cheater. If there is a cheating report, the game server 130 may take a necessary action, such as disqualifying the cheater's account. Since the data management module 110 and the aimbot detection module 120 are within the trusted execution environment 102 and all detection reports are sent through the secure channel, the game server 130 may trust a report from each client 101, thereby addressing. The game server 130 may collect a sequence of detection reports from each client 101 and may make a delayed decision.

In more detail, the data management module 110 may track every observable game play information generated from all the observable players to determine whether each player is using an aimbot. This is possible because every FPS game client constantly propagates their action data to others.

However, the game play information provides only partial information on the action data of the game player. For example, not every mouse movement but only a subset thereof may be sent through the network for efficiency. Also, each user may observe action data of a nearby game player since the game engine 140 does not need to render an invisible game player. Such restrictions may equally apply to an aimbot detection mechanism proposed herein.

The aimbot detection system according to an example embodiment does not need to modify the game engine 140 to detect an aimbot and each client 101 handles only a portion of the game play information, making the detection more focused and efficient.

To ease explanation, observable game play information from an FPS game client may be expressed as a series of tuples (*t*, *uᵢ*, *p̅, a̅ₛ*, e). Here, t denotes a time of observation, *uᵢ* denotes an ID of a player being observed, *̅p̅*̅ denotes a position of the player (in Cartesian coordinates), *a̅ₛ* denotes an aiming angle of the player (in spherical coordinates), and e denotes game play information in a game (for the player *uᵢ*). Here, the game play information corresponds to any game event generated by or sent to the player, such as when the player (or another player) fires its weapon, gets hit, or is killed by the other player. Such events may be represented as fire, hit, and dead, respectively. In a timestamp in which no such events occur, a corresponding field is left blank.

When two or more players are simultaneously observable, a plurality of events may be present for the same t. The data management module 110 may receive an observable event stream as input to the network and may output a transformed feature vector stream when an in-game event that triggers detection occurs. Here, it may include three major stages: (1) vector computation, (2) normalization, and (3) sanitization.

### (1) Vector computation

The data management module 110 of each client 101 may transform each piece of observable game play information (t, *uᵢ*, *̅p̅*̅, *̅a̅*̅ₛ, e) to a feature vector (*t*, *uᵢ*, *̅p̅*̅, *a̅_{c}*, e, aim). Here, *a̅_{c}* denotes an aiming angle of a player *uᵢ* expressed as a unit vector in Cartesian coordinates, and aim denotes a Boolean value indicating whether the player *uᵢ* is currently aiming at any opponent. The data management module 110 may convert a vector in a spherical coordinate (*a̅ₛ*) to a vector in a Cartesian coordinate (*a̅_{c}*) since difference in angle does not always entail different meaning. Here, 0° and 360° have two different values although they represent the same state.

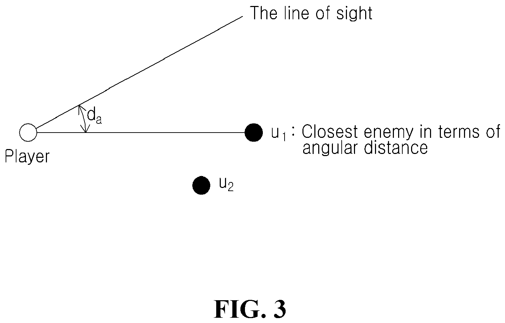

For the data management module 110 to acquire aim, each client 101 may compute *dₐ* representing a smallest angular distance between a game player's current line of sight and observable opponents. FIG. 3 illustrates an angle between a line of sight and a potential opponent. Referring to FIG. 3, enemy *u*₂ is closer to a game player in terms of Euclidean distance, but *u*₁ is closer to the game player in terms of angular distance. Therefore, the data management module 110 may consider *u*₁ as a current target of the game player and may compute data based thereon. When *dₐ* is smaller than a threshold (30° in a current implementation), aim is set to true, otherwise set to false. Since an observer may have a wrong value, aim is an estimated value. For example, it is a case in which the game player is aiming at an opponent invisible by a current observer. This problem does not affect detection results since the aimbot detection model makes a decision only if both a player and its target are visible by a client. In addition, a value of aim does not affect the decision. Only an aiming angle eventually affects the decision.

### (2) Normalization

In practice, each client 101 may collect game play information at an exact time at which an event occurs. As a result, the collected game play information may have irregular timestamps and may generate a time series with uneven time intervals. Since a recurrent neural network (RNN) generally expects to handle regular sequences, collected logs need to be normalized to a fixed time interval.

The data management module 110 may perform linear interpolation to fill in missing values by following the linear trend among existing observations. Since most modern FPS games run on 60 frames per second, the collected events may be normalized according to time intervals of 16 ms in an example embodiment. It is assumed that the game player was at (1.0, 1.0, 1.0) when t = 0, at (1.1, 0.9, 0.1) when t = 8, and at (1.5, 0.6, 0.8) when t = 34. After the normalization stage, three events may occur at t = 0, 16, and 32. For example, there is an interpolation event (1.235, 0.811, 0.376) at t = 16. Here, as a time interval (i.e., 16 ms) is too small to have a sudden change, linear interpolation may be sufficient for normalizing collected game-play logs.

### (3) Sanitization

The data management module 110 may filter unnecessary action data before providing the transformed game play information to the aimbot detection module 120. In particular, the data management module 110 may observe a sudden change in a position and an aiming direction when the game player dies and respawns (i.e., e=dead). In this case, the aimbot detection model may incorrectly flag the game player as suspicious. This happens in a deathmatch of which a goal is to kill other game players as many times as possible. The data management module 110 may always remember a previous action of the game player and may compare a current action of the player with the previous action of the player to detect an abrupt change in a position and an aiming direction of the game player. When this case is identified, the data management module 110 does not send the game play information (action data) to the aimbot detection module 120.

The aimbot detection module 120 of each client 101 may derive aimbot detection results from a firing event using the aimbot detection model. The aimbot detection module 120 may use an unsupervised learning approach to train an RNN. The aimbot detection module 120 may detect an aimbot in a distributed manner by verifying an "abnormal" aiming movement at the firing event through the aimbot detection model built by observing normal aiming movements. The aimbot detection model uses the RNN trained only on an observation log of a benign player to model normal aiming movements. The aimbot detection module 120 may use a preprocessed game event stream returned by the data management module 110 to analyze events in three stages including (1) event filtering, (2) anomaly scoring, and (3) reporting results.

### (1) Event filtering

In an attempt to bypass easy detection, a modern aimbot defaults to a 'between shots' mode in which the aimbot locks on to a target only when a user has triggered (fired) a weapon. When this mode is on, an aimbot user and a benign user are basically undistinguishable unless a weapon is fired. Therefore, every event is not tracked during game play. Instead, the aimbot detection module 120 focuses on each firing event (i.e., e = fire) as well as relevant action data adjacent to (before and after) the event. Also, the aimbot detection module 120 may filter all targetless fire events (i.e., aim = false) since the aimbot may not be activated without a proper target.

In practice, since the RNN generally requires a set of previously observed data points to operate, more events before than after the exact event the weapon is fired may be accumulated. For a window size w and a predetermined duration d of the given RNN, a total of w+2d relevant events for each fire event, which include w+d event before a fire and the rest d events including a fire action, may be accumulated.

Setting w and d too small or too large may provide insufficient or excessive information to each relevant event set. Therefore, to optimize detection performance, parameters may be selected to be w=20 and d=10.

### (2) Anomaly scoring

To effectively detect an aimbot, the aimbot detection module 120 may distribute a pre-trained RNN-based aim bot detection model configured to encode an aiming movement of a normal game player to each client 101. Using the aimbot detection model, each client 101 may compute an anomaly score for each set of observed aiming movements (before and after a fire event). Here, a higher score may represent the likelihood of being an aimbot user.

Specifically, the aimbot detection model may receive w-1 consecutive observations of aiming angles (*a̅c*) as input and may predict an aiming direction of a w-th event. The anomaly score represents a prediction error that is computed by comparing an L1 distance between a predicted value and an actual value for the w-th event. Since the aimbot detection model is trained only on an aiming movement of a benign player, an aiming movement of an aimbot may result in notably worse results compared to prediction of benign players. As a result, the aimbot detection module 120 may observe a higher anomaly score for an aimbot user through the aimbot detection model.

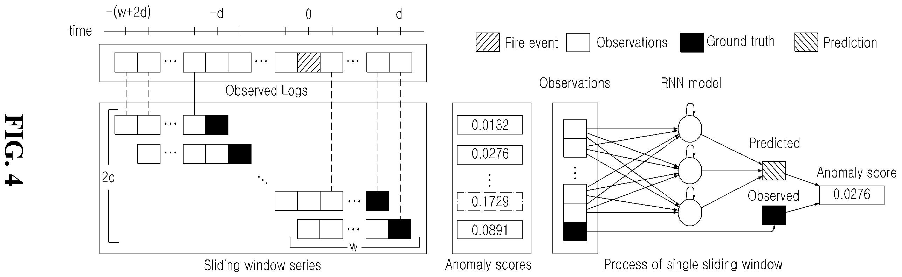

FIG. 4 illustrates a method of computing an anomaly score according to an example embodiment. The aimbot detection model may generate a total of 2d anomaly scores for each fire event by dividing firing-relevant events into a plurality of sliding windows and by acquiring 2d distinct RNN input sequences with length w. Among all the anomaly scores, a maximum value may be selected as the resulting anomaly score of the event.

An event-wise inspection approach proposed in an example embodiment has two main advantages over the conventional methos. First, it is possible to identify exact movement at which a cheating occurs. Second, since an event-level movement needs to be monitored and controlled, it is very difficult to develop an aimbot capable of avoiding the detection mechanism.

### (3) Reporting results

After computing an anomaly score for each fire event, the aimbot detection module 120 may compare the anomaly score to a threshold to determine a final label. Here, the threshold may be determined with a validation inspection dataset.

In determining a threshold, two basic criteria, (1) best accuracy and (2) best precision, may be proposed and evaluated. The best accuracy relates to selecting a threshold such that aimbot prediction accuracy is maximized in given validation data. The best precision relates to selecting a threshold such that no false positive is present in given validation data. As a result, the former achieves the best prediction accuracy by balancing FP and FN, while the latter prevents a benign user to be falsely accused of cheating.

Once the decision is made, each client 101 may send a cheating detection report to the game server 130 using a secure channel. Each cheating detection report is simply a tuple (aimbot, *uᵢ*, *t*). Here, aimbot denotes a Boolean variable representing detection results (true if an aimbot is used by the player *uᵢ*), *uᵢ* denotes a cheater being observed, and t denotes a timestamp of a corresponding fire event. Each client 101 may send a detection report for every observed fire event instead of sending a single aggregated result for the entire duration of a game. Through this, it is possible to prevent an attacker from guessing a decision made by each client 101 and to provide more flexibility to a server when aggregating the results.

Also, the game server 130 or a game provider may serve to make a final decision based on a detection report acquired from each client 101. One straightforward policy is to strictly disqualify a corresponding game player if there is at least one cheating report. However, this policy suffers from potential false alarms caused by the inaccuracy of the aimbot detection model although each report is trustworthy.

Therefore, this challenge may be addressed by delaying the decision. Since the cheating report is submitted multiple times (e.g., 11.83 times on average in experiments), the game server 130 may accumulate detection reports and may make a decision based on more information later. Specifically, when the number of consecutive cheating reports during game play is larger than a threshold θ, a corresponding game player may be disqualified. For example, it is assumed that the aimbot detection model has a false positive rate of 5%. Then, when θ= 5, the probability of falsely accusing a game player as a cheater is only 0.00003%. In this manner, the game provider may easily offset the inaccuracy of the aimbot detection model.

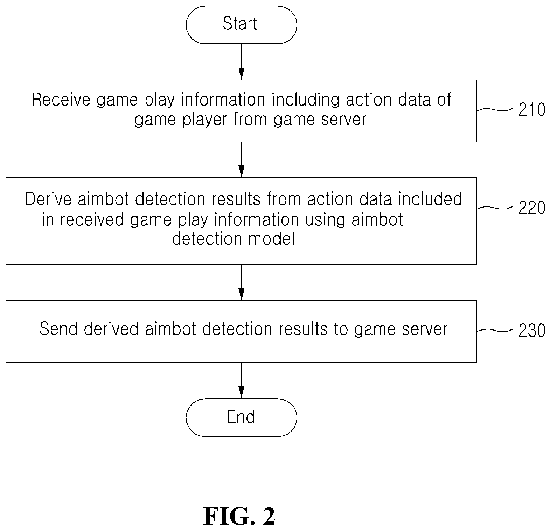

FIG. 2 is a flowchart illustrating an aimbot detection method according to an example embodiment.

In operation 210, an aimbot detection system according to an example embodiment may receive game play information including action data of a game player from a game server. Operation 210 may be performed by a data management module configured in the aimbot detection system. The aimbot detection system may transform the action data of the game player included in the received game play information, to input to an aimbot detection model. The aimbot detection system may transfer the game play information including the action data of the game player, received from the game server to a game engine and, at the same time, may transfer the transformed action data to an aimbot detection module. The game engine may display the received action data on a computer screen for a smooth game play. Here, the game server and the data management module may perform encrypted communication to make bugging or tampering difficult. Here, the action data may include actions, such as a game player' position, line of sight, and firing a weapon.

In operation 220, the aimbot detection system may derive aimbot detection results from the action data included in the received game play information using the aimbot detection model. Operation 220 may be performed by the aimbot detection module configured in the aimbot detection system. The aimbot detection system may extract a player's line-of-sight-related information and weapon firing information in the action data included in the received game play information. The aimbot detection system may input the extracted line-of-sight-related information and weapon firing information to the aimbot detection model. The aimbot detection model refers to a model that predicts a movement of a player after a predetermined period of time and may be trained to detect an aimbot by comparing a difference between a predicted action of the player and an actual action of the player. If the difference is higher than a reference value (threshold), the aimbot detection system may determine that the aimbot is used at the player.

In operation 230, the aimbot detection system may send the derived aimbot detection results to the game server. Operation 230 may be performed by the aimbot detection module configured in the aimbot detection system. The aimbot detection module and the game server may use encrypted communication that disallows bugging or tampering. The game server may take an action suitable for a relevant policy, such as sanctioning a detected player based on detection results received from each of a plurality of clients.

The apparatuses described herein may be implemented using hardware components, software components, and/or combination of the hardware components and the software components. For example, a processing device and components described herein may be implemented using one or more general-purpose or special purpose computers, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will be appreciated that the processing device may include multiple processing elements and/or multiple types of processing elements. For example, the processing device may include multiple processors or a processor and a controller. In addition, other processing configurations are possible, such as parallel processors.

The software may include a computer program, a piece of code, an instruction, or at least one combination thereof, for independently or collectively instructing or configuring the processing device to operate as desired. Software and/or data may be embodied in any type of machine, component, physical equipment, virtual equipment, computer storage medium or device, to provide instructions or data to the processing device or be interpreted by the processing device. The software also may be distributed over network coupled computer systems so that the software is stored and executed in a distributed fashion. The software and data may be stored by one or more computer readable storage mediums.

The methods according to example embodiments may be implemented in a form of a program instruction executable through various computer methods and recorded in non-transitory computer-readable media. The media may include, alone or in combination with program instructions, a data file, a data structure, and the like. The program instructions recorded in the media may be specially designed and configured for the example embodiments or may be known to those skilled in the computer software art and thereby available. Examples of the media include magnetic media such as hard disks, floppy disks, and magnetic tapes; optical media such as CD ROM and DVD; magneto-optical media such as floptical disks; and hardware devices that are specially configured to store and perform program instructions, such as read-only memory (ROM), random access memory (RAM), flash memory, and the like. Examples of program instructions include a machine code as produced by a compiler and an advanced language code executable by a computer using an interpreter.

Although the example embodiments are described with reference to some specific example embodiments and accompanying drawings, it will be apparent to one of ordinary skill in the art that various alterations and modifications in form and details may be made in these example embodiments without departing from the spirit and scope of the claims and their equivalents. For example, suitable results may be achieved if the described techniques are performed in different order, and/or if components in a described system, architecture, device, or circuit are combined in a different manner, and/or replaced or supplemented by other components or their equivalents.

Therefore, other implementations, other example embodiments, and equivalents of the claims are to be construed as being included in the claims.

## Claims

1. An aimbot detection system comprising:
a data management module configured to receive game play information including action data of a game player from a game server; and
an aimbot detection module configured to derive aimbot detection results from the action data included in the received game play information using an aimbot detection model,
wherein the data management module and the aimbot detection module are configured in a trusted execution environment (TEE) of a client.

2. The aimbot detection system of claim 1, wherein the data management module is configured to transform the action data of the game player included in the received game play information, to input to the aimbot detection model.

3. The aimbot detection system of claim 1, wherein the data management module is configured to transfer the game play information that includes the action data of the game player, received from the game server, to each of a game engine and the aimbot detection module, and
the aimbot detection module is configured to receive weapon firing information and information related to a time in the action data of the game player.

4. The aimbot detection system of claim 1, wherein the aimbot detection model is configured to predict an action of the game player after a predetermined period of time and is trained to detect an aimbot by comparing a difference between the predicted action of the game player and an actual action of the game player.

5. The aimbot detection system of claim 1, wherein the aimbot detection module is configured to determine that the game player uses the aimbot when a difference between an action of the game player and an actual action of the game player is greater than a reference value as detection results derived through the aimbot detection model.

6. The aimbot detection system of claim 5, wherein the aimbot detection module is configured to send the derived detection results to the game server.

7. The aimbot detection system of claim 1, wherein the aimbot detection system is configured to perform encrypted communication that disallows bugging or tampering when receiving the game play information from the game server or sending the derived aimbot detection results to the game server.

8. The aimbot detection system of claim 1, wherein the game server is configured to take an action according to a policy set for the game player based on the derived aimbot detection results.

9. An aimbot detection method performed by an aimbot detection system, the aimbot detection method comprising:
receiving game play information including action data of a game player from a game server;
deriving aimbot detection results from the action data included in the received game play information using an aimbot detection model; and
sending the derived aimbot detection results to the game server,
wherein a data management module and an aimbot detection module are configured in a trusted execution environ (TEE) of a client.
